# EUROPEAN PATENT APPLICATION

(11) **EP 4 770 257 A1**
(43) Date of publication of application: **01.07.2026**
(21) Application number: 24858068.0
(22) Date of filing: 08.07.2024
(51) Int. Cl.: H04W 74/08

(54) **RANDOM ACCESS METHOD AND DEVICE, AND STORAGE MEDIUM**

(30) Priority: 29.08.2023 CN 202311115047
(71) Applicant: ZTE Corporation, Shenzhen, Guangdong 518057 (CN)
(72) Inventor: XIE, Feng, Shenzhen, Guangdong 518057 (CN); WANG, Fei, Shenzhen, Guangdong 518057 (CN); LIU, Hanchao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/104250
(87) International publication number: WO 2025/044524

(57) **Abstract**

Provided are a random access method and device, and a storage medium. The random access method comprises: sending a random access request message to multiple base stations; and receiving a first message, wherein the first message comprises respective random access response messages from the multiple base stations to the terminal.

## Description

This application claims priority of Chinese Patent Application No. 202311115047.8, filed on August 29, 2023, which is incorporated into this application by reference in its entirety.

### TECHNICAL FIELD

The present disclosure relates to the field of communication technologies, and in particular, to a random access method and device, and a storage medium.

### BACKGROUND

In the evolution of new scenarios, for the sake of rapid multi-point collaboration, terminal devices or user equipment (UE) are required to simultaneously utilize resources of a plurality of cells or base stations at an early stage.

### SUMMARY

In an aspect, a random access method is provided in the embodiments of the present disclosure and applied to a terminal. The random access method includes:
sending random access request messages to a plurality of base stations; and
receiving a first message, the first message including random access response messages of the plurality of base stations for the terminal.

In another aspect, a random access method is provided in the embodiments of the present disclosure and applied to a first base station. The random access method includes:
acquiring random access response messages of a plurality of base stations; and
sending a first message to a terminal, the first message including the random access response messages of the plurality of base stations for the terminal.

In yet another aspect, a random access device is provided in the embodiments of the present disclosure and applied to a terminal. The random access device includes: a sending module and a receiving module.

The sending module is configured to send random access request messages to a plurality of base stations.

The receiving module is configured to receive a first message. The first message includes random access response messages of the plurality of base stations for the terminal.

In yet another aspect, a random access device is provided in the embodiments of the present disclosure and applied to a first base station. The random access device includes: an acquisition module and a sending module.

The acquisition module is configured to acquire random access response messages of a plurality of base stations.

The sending module is configured to send a first message to a terminal. The first message includes the random access response messages of the plurality of base stations for the terminal.

In yet another aspect, a communication device is provided in the embodiments of the present disclosure. The communication device includes a memory and a processor. The memory is coupled to the processor. The memory is configured to store a computer program. Upon executing the computer program, the processor performs the random access method as described in any one of the embodiments described above.

In yet another aspect, a computer readable storage medium is provided in the embodiments of the present disclosure. The computer readable storage medium stores computer program instructions. Upon the computer program instructions are executed by a processor, the random access method as described in any one of the embodiments described above is performed.

In yet another aspect, a computer program product is provided in the embodiments of the present disclosure. The computer program product includes computer program instructions. Upon the computer program instructions are executed by a processor, the random access method as described in any one of the embodiments described above is performed.

### BRIEF DESCRIPTION OF THE DRAWINGS

In order to describe technical solutions in the present disclosure more clearly, the accompanying drawings to be used in some embodiments of the present disclosure will be introduced briefly below. However, the accompanying drawings to be described below are merely accompanying drawings of some embodiments of the present disclosure, and a person of ordinary skill in the art may obtain other drawings according to these drawings.
FIG. 1 is a schematic diagram showing an architecture of a mobile communication network, in accordance with some embodiments;
FIG. 2 is a schematic diagram of a data structure, in accordance with some embodiments;
FIG. 3 is a schematic diagram of another data structure, in accordance with some embodiments;
FIG. 4 is a schematic diagram of yet another data structure, in accordance with some embodiments;
FIG. 5 is a flow chart of a random access method, in accordance with some embodiments;
FIG. 6 is a schematic diagram of yet another data structure, in accordance with some embodiments;
FIG. 7 is a schematic diagram of yet another data structure, in accordance with some embodiments;
FIG. 8 is a schematic diagram of yet another data structure, in accordance with some embodiments;
FIG. 9 is a flow chart of another random access method, in accordance with some embodiments;
FIG. 10 is a schematic diagram showing a structure of a random access device, in accordance with some embodiments;
FIG. 11 is a schematic diagram showing a structure of another random access device, in accordance with some embodiments; and
FIG. 12 is a schematic diagram showing a structure of a communication device, in accordance with some embodiments.

### DETAILED DESCRIPTION

The technical solutions in the present disclosure will be described clearly and completely below with reference to the accompanying drawings in the present disclosure. However, the described embodiments are merely some but not all embodiments of the present disclosure. All other embodiments obtained based on the embodiments of the present disclosure by a person of ordinary skill in the art without paying any creative effort will be included in the protection scope of the present disclosure.

It will be noted that, in the present disclosure, the term such as "exemplary/exemplarily" or "for example" is used to represent an example, illustration, or explanation. Any embodiment or design solution described with "exemplary/exemplarily" or "for example" in the present disclosure is not necessarily to be construed as preferred or advantageous over other embodiments or design solutions. Rather, the use of the term such as "exemplary/exemplarily" or "for example" is intended to present relevant concepts in a specific manner.

Hereinafter, the terms "first" and "second" are used for descriptive purposes only, and are not to be construed as indicating or implying a relative importance or implicitly indicating the number of indicated technical features. Thus, a feature defined with "first" or "second" may explicitly or implicitly include one or more of the features.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, only B, and both A and B. In addition, the term such as "at least one" means one or more, and the term such as "a/the plurality of" means two or more.

In some technologies, in the evolution of new scenarios, for the sake of rapid multi-point collaboration, terminal devices or user equipment (UE) are required to simultaneously utilize resources of a plurality of cells or base stations at an early stage. However, the current protocol only supports the UE to configure a plurality of carrier resources by means of carrier aggregation or dual connectivity after the UE enters a connected state, which fails to meet the requirements of the new scenarios.

On this basis, a random access method is provided in the embodiments of the present disclosure.

The technical solutions provided in the embodiments of the present disclosure may be applied to a variety of mobile communication networks, such as new radio (NR) mobile communication networks using the 5th generation mobile communication technology (5G), future mobile communication networks, or a plurality of communication convergence systems, and the embodiments of the present disclosure are not limited thereto.

A network architecture of the mobile communication network (including but not limited to 3G, 4G, 5G and future mobile communication networks) in the embodiments of the present disclosure may include at least one first communication node and at least one second communication node. It will be understood that, in the examples, in a downlink, the first communication node may be a network-side device (e.g., including but not limited to a base station), and the second communication node may be a terminal-side device (e.g., including but not limited to a terminal). Of course, in an uplink, the first communication node may also be a terminal-side device, and the second communication node may also be a network-side device. In a case where two communication nodes are in a device-to-device communication, both the first communication node and the second communication node may be base stations or terminals.

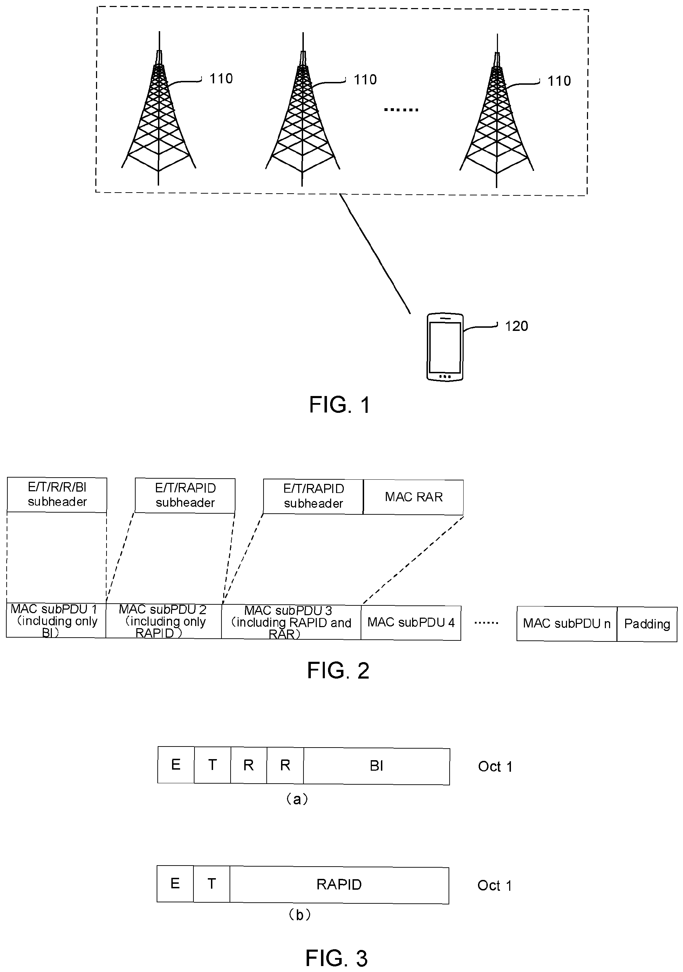

For example, in an example where the first communication node is a base station and the second communication node is a terminal, FIG. 1 is a schematic diagram showing a network architecture of a mobile communication network provided in the embodiments of the present disclosure. As shown in FIG. 1, the mobile communication network includes a base station 110 and a terminal 120.

In some embodiments, the base station 110 is configured to provide wireless access services to a plurality of terminals 120. For example, a base station provides a service coverage area (also referred to as a cell). A terminal 120 entering this area may communicate with the base station 110 by a wireless signal, to receive a wireless access service provided by the base station 110.

In some embodiments, the base station 110 may be a base station or an evolutional node B (eNB or eNodeB) in long term evolution (LTE) or long term evolution advanced (LTE-A) , a base station device in a 5G network, or a base station in a future communication system. The base station may include a variety of network-side devices such as a variety of macro base stations, micro base stations, home base stations, wireless remote devices, reconfigurable intelligent surfaces (RISs), routers, and wireless fidelity (WIFI) devices.

In some embodiments, the terminal 120 may be a device with wireless transceiving functions. The terminal 120 may be deployed on land (including indoor or outdoor, handheld, wearable or vehicle-mounted). The terminal 120 may also be deployed on water (e.g., on a ship). The terminal 120 may also be deployed in the air (e.g., on an airplane, on a balloon and on a satellite). The terminal may be a mobile phone, a pad, a computer with a wireless transceiving function, a virtual reality (VR) terminal, an augmented reality (AR) terminal, a wireless terminal in an industrial control system, a wireless terminal in a self driving system, a wireless terminal in a remote medical system, a wireless terminal in a smart grid, a wireless terminal in a transportation safety system, a wireless terminal in a smart city, a wireless terminal in a smart home, etc. The embodiments of the present disclosure do not limit the application scenarios. The terminal sometimes may also be referred to as a user, user equipment (UE), an access terminal, a UE unit, a UE station, a mobile station, a mobile platform, a remote station, a remote terminal, a mobile device, a UE terminal, a wireless communication device, a UE agent, a UE device, etc., and the embodiments of the present disclosure are not limited thereto.

It will be noted that, FIG. 1 is only a diagram showing an exemplary architecture, and the number and names of the devices included in FIG. 1 are not limited, and in addition to the devices shown in FIG. 1, the communication system may further include other devices (e.g., a core network device).

The embodiments of the present disclosure do not limit the application scenarios. The system architectures and service scenarios described in the embodiments of the present disclosure are intended to more clearly explain the technical solutions in the embodiments of the present disclosure and do not constitute a limitation on the technical solutions provided in the embodiments of the present disclosure. Those skilled in the art will know that with the evolution of network architectures and the emergence of new service scenarios, the technical solutions provided in the embodiments of the present disclosure are also applicable to similar technical problems.

In some embodiments, in the mobile communication network shown in FIG. 1, the terminal 120 may establish a connection with the base station 110 through a random access procedure. For example, the terminal 120 may initiate a random access request (e.g., random access preamble, RAP) message to the base station 110, and the random access request message includes an index of a random access preamble. Correspondingly, the base station 110 sends a random access response (RAR) message to the terminal 120 after receiving the random access request message from the terminal 120.

The random access response message may include a media access control (MAC) subheader and a MAC RAR.

In some embodiments, the random access response message may be carried in a media access control (MAC) protocol data unit (PDU). For example, as shown in FIG. 2, the MAC PDU may include one or more MAC subPDUs and padding data (padding).

For example, the MAC subPDU may include at least one of the following structures.

Structure 1: The MAC subPDU includes three header fields.

For example, as shown in (a) of FIG. 3, the three header fields include: an extension field (E), a type field (T), and an RAP identifier (ID).

The extension field (E) is configured to indicate whether there are other fields following the current MAC subPDU (that is, whether the current MAC subPDU is the last one in the MAC PDU).

The type field (T) is configured to indicate a type of the MAC subheader. For example, in a case where T is set to 0, it means that the MAC subheader includes a backoff indicator (BI); in a case where T is set to 1, it means that the MAC subheader includes an RAP identifier (ID). T will be set to 0 in the structure shown in (a) of FIG. 3.

The RAP identifier (RAPID) corresponds to the preamble index carried in the random access request message from the terminal 120. In this way, the terminal 120 may determine whether the corresponding random access request (RAR) is successfully received based on the RAPID. For example, in response to the RAPID being the same as the index carried in the random access request message sent by the terminal 120, the terminal 120 determines that the corresponding RAR is successfully received.

Structure 2: The MAC subPDU includes five header fields.

For example, as shown in (b) of FIG. 3, the five header fields include:
an extended field (E);
a type field (T); T being set to 1 in the structure shown in (b) of FIG. 3;
two reserved (R) bits; and
a BI, configured to instruct the terminal 120 to delay initiating the random access procedure in response to a cell being overloaded.

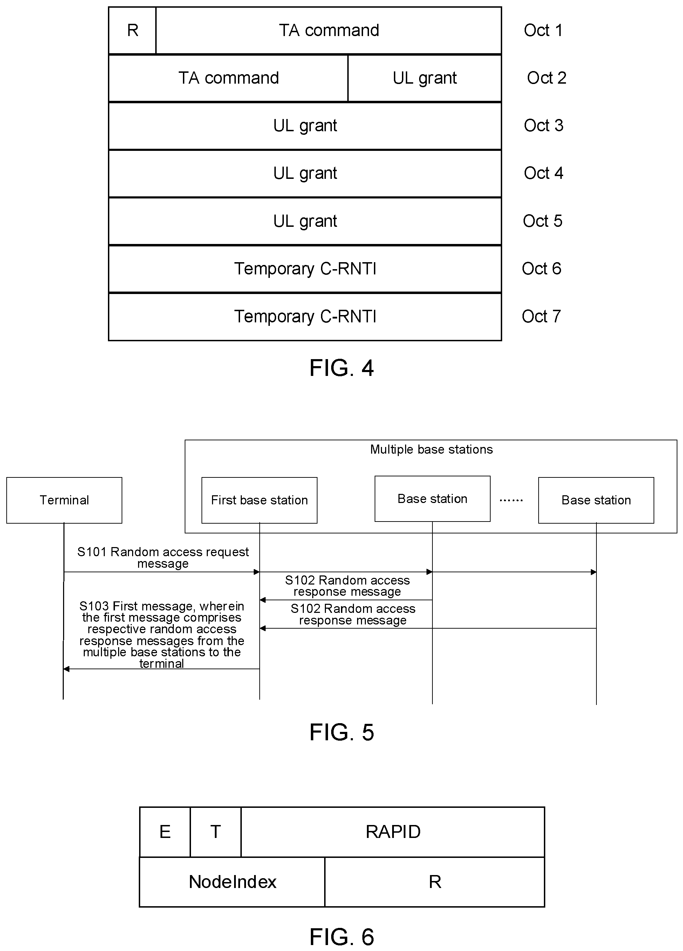

Structure 3: As shown in FIG. 4, the MAC subPDU includes an RAPID (three header fields) and an MAC RAR.

For example, as shown in FIG. 4, the MAC RAR includes at least one of:
uplink grant (UL grant) information configured by the base station 110 for the terminal 120;
a cell radio network temporary identifier (C-RNTI) configured by the base station 110 for the terminal 120; and
a timing advance (TA) command configured by the base station 110.

FIGS. 2 to 4 show the structure of the MAC subPDU provided in some technologies. It may be seen that the requirements of the new scenarios described in the background cannot be met based on the structures of the MAC subPDU provided in some technologies, namely, the terminal cannot establish connections with a plurality of base stations or cells at the same time and use the resources of the plurality of base stations or cells.

For the technical problems described above, a random access method is provided in the embodiments of the present disclosure, the idea of which is as follows: a terminal sends random access request messages to a plurality of base stations, and then receives a first message through a first base station of the plurality of base stations, where the first message includes random access response messages of the plurality of base stations for the terminal. In this way, the terminal may receive the random access response messages of the plurality of base stations simultaneously, and then establish connections with the plurality of base stations at the same time, to perform data interaction.

The random access method provided in the embodiments of the present disclosure is described below. For example, the random access method provided in the embodiments of the present disclosure may be applied to the mobile communication network shown in FIG. 1.

As shown in FIG. 5, the random access method provided in the embodiments of the present disclosure may include the following steps.

In S101, a terminal sends random access request messages to a plurality of base stations. Correspondingly, the plurality of base stations receive the random access request messages sent by the terminal.

In some embodiments, the plurality of base stations each generate a random access response message for the terminal after receiving the random access request messages sent by the terminal. For example, the random access request message includes a random access preamble index; correspondingly, the random access response message may include identifier information corresponding to the random access preamble. For example, the random access response message may carry an RAPID, and the RAPID corresponds to the preamble index carried in the random access request message of the terminal.

In some embodiments, the terminal may send the random access request messages to the plurality of base stations by using the same or different resources (e.g., the resources including at least one of the following: a time domain resource, a frequency domain resource, and a spatial domain resource). For example, the terminal may send the random access request messages to the plurality of base stations by using the same resources; alternatively, the terminal may send the random access request messages to the plurality of base stations on random access channels (RACH) associated with the plurality of base stations.

In some embodiments, the terminal may send the random access request messages to the plurality of base stations in any one of the following states:
a radio resource control (RRC) idle state (RRC_IDLE);
an RRC inactive state (RRC_INACTIVE); and
an RRC connected state (RRC_CONNECTED).

It may be understood that compared with the method in some technologies where the terminal can only initiate random access in the RRC connected state, the embodiments of the present disclosure enable the terminal to initiate a random access request before the terminal enters the RRC connected state (e.g., when the terminal is in the RRC idle state or RRC inactive state), so that the terminal may use the resources of the base stations earlier.

In S102, a first base station acquires random access response messages of the plurality of base stations.

The first base station is one of the plurality of base stations.

For example, the first base station may acquire the random response messages of other base stations among the plurality of base stations other than the first base station through a core network; alternatively, the first base station may acquire the random response messages of other base stations among the plurality of base stations other than the first base station through an Xn interface (or an air interface).

In S103, the first base station sends a first message to the terminal. The first message includes the random access response messages of the plurality of base stations for the terminal. Correspondingly, the terminal receives the first message.

In some embodiments, the method described above may also be implemented such that each of the plurality of base stations sends a random access response message to the terminal.

It may be understood that, compared with the method in which each of the plurality of base stations sends a random access response message to the terminal, the method in which the first base station of the plurality of base stations acquires the random access response messages of the plurality of base stations and uniformly sends the random access response messages to the terminal may save channel resources and improve communication efficiency.

For example, a structure of the first message mentioned above may include the following.

Structure 1: The first message includes a plurality of MAC subPDUs.

Each MAC subPDU is configured to carry a random access response message of a base station.

For example, the MAC subPDU includes a MAC subheader and a MAC RAR.

In an implementation, for one of the plurality of MAC subPDUs, the MAC subheader of the MAC subPDU includes a node identifier field. The node identifier field is configured to indicate an identifier of the base station corresponding to the MAC subPDU. The MAC RAR of the MAC subPDU includes at least one of:
uplink grant information configured by the base station corresponding to the MAC subPDU;
a temporary authentication identifier configured by the base station corresponding to the MAC subPDU; and
a timing advance command configured by the base station corresponding to the MAC subPDU.

For example, as shown in FIG. 6, the node identifier field (Nodelndex) may be added based on the original fields of the MAC subheader, to indicate the identifier of the base station corresponding to the MAC subPDU.

It may be understood that in the implementation described above, the first message may include a plurality of MAC subPDUs, and the plurality of MAC subPDUs are configured to carry random access response messages of a plurality of base stations, respectively. The identifier of the base station corresponding to the MAC subPDU is marked in the MAC subheader of each MAC subPDU, and the information configured by the base station for the terminal is carried in the MAC RAR. In this way, the terminal may receive random access responses of different base stations for the terminal, and further establish connections with the plurality of base stations simultaneously to transmit and receive data.

Structure 2: The first message includes a MAC subPDU.

The MAC subPDU includes a MAC subheader and a MAC RAR. The MAC RAR is configured to carry the random access response messages of the plurality of base stations.

In some embodiments, the MAC RAR may include a plurality of node identifier fields. Each node identifier field includes an identifier of a base station.

In some embodiments, the MAC RAR may further include uplink grant information, temporary authentication identifiers, and timing advance commands configured by the plurality of base stations.

In an implementation, the MAC RAR includes a plurality of field sets. A field set includes a first field, a second field, and a third field. The first field is configured to carry uplink grant information configured by a base station. The second field is configured to carry a temporary authentication identifier configured by the base station. The third field is configured to carry a time advance command configured by the base station.

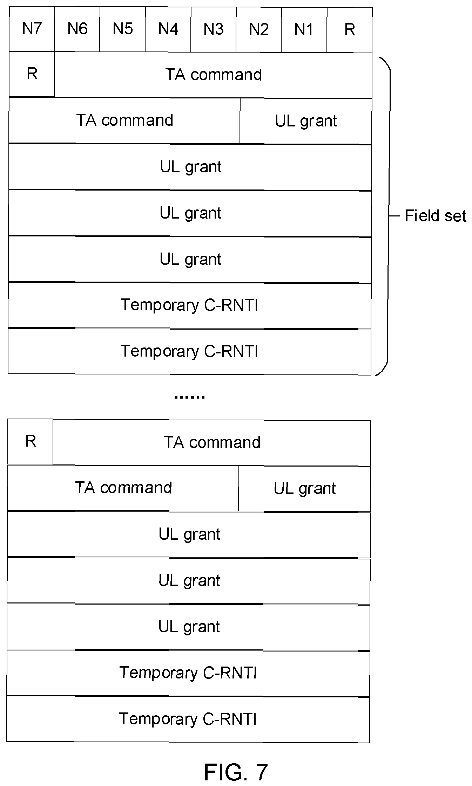

For example, referring to FIG. 7, FIG. 7 is a schematic diagram showing a structure of a MAC RAR provided in the embodiments of the present disclosure. As shown in FIG. 7, the MAC RAR may include a plurality of field sets, and a field set corresponds to a random access response message of a base station. The field set may include: a first field for carrying the UL grant, a second field for carrying the temporary C-RNTI, and a third field for carrying the TA command.

In addition, the N field shown in FIG. 7 is the node identifier field (Nodelndex), and the node identifier field is configured to indicate an identifier of the base station corresponding to the MAC subPDU.

It may be understood that a configuration parameter of each base station is an independent field in the structure of the MAC RAR shown in FIG. 7, so that users may schedule each base station independently as required.

In another implementation, the MAC RAR includes a fourth field, a fifth field, and a sixth field.

The fourth field is configured to carry the uplink grant information configured by the plurality of base stations. The fifth field is configured to carry the temporary authentication identifiers configured by the plurality of base stations. The sixth field is configured to carry the timing advance commands configured by the plurality of base stations.

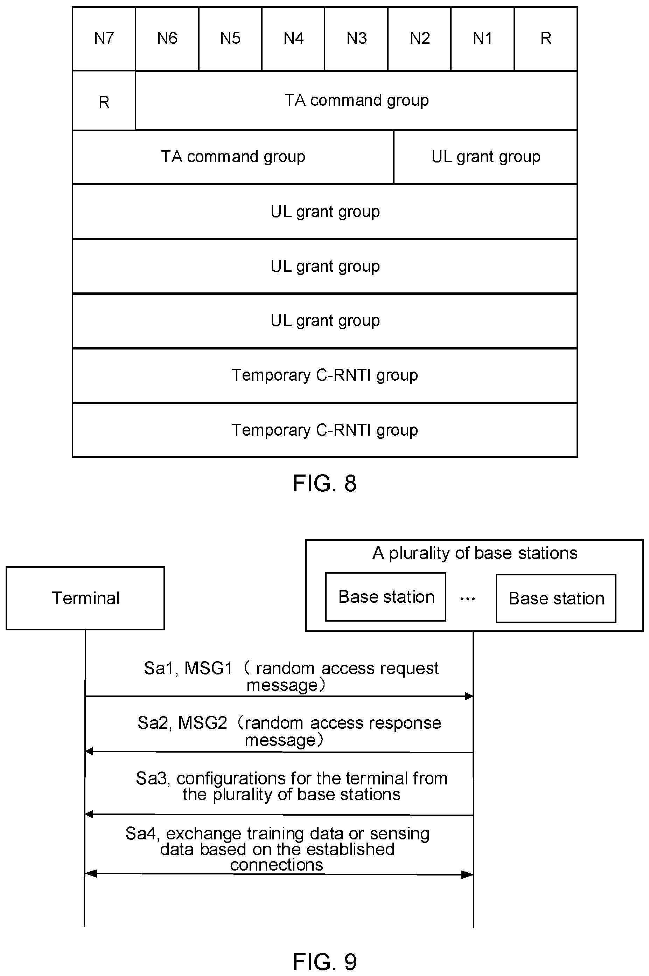

For example, referring to FIG. 8, FIG. 8 is a schematic diagram showing a structure of another MAC RAR provided in the embodiments of the present disclosure. As shown in FIG. 8, the UL grants configured by the plurality of base stations may be coupled into a UL grant group, and the UL grant group is carried in the fourth field; the temporary C-RNTIs configured by the plurality of base stations are coupled into a temporary C-RNTI group, and the temporary C-RNTI group is carried in the fifth field; and the timing advance commands (TA commands) configured by the plurality of base stations are coupled into a TA command group, and the TA command group is carried in the sixth field.

It will be noted that the structure of the MAC RAR shown in FIG. 8 is for illustration only and does not represent the final number of bits of each field.

It may be understood that in the structure shown in FIG. 8, the configuration parameters of the plurality of base stations are coupled for joint transmission, which may reduce bit overhead.

In another embodiment, the structures shown in FIGS. 7 and 8 may be combined, that is, some configuration parameters are transmitted independently, while other configuration parameters are coupled together for joint transmission.

It may be understood that, based on the method provided in the embodiments of the present disclosure, a terminal may send random access request messages to a plurality of base stations, and then receive a first message through a first base station of the plurality of base stations, where the first message includes random access response messages of the plurality of base stations for the terminal. In this way, the terminal may receive the random access response messages of the plurality of base stations simultaneously, and then establish connections with the plurality of base stations at the same time, to perform data interaction.

For convenience of understanding, the random access method provided in the embodiments of the present disclosure is described below by considering a scenario as an example.

For example, the random access method provided in the embodiments of the present disclosure may be applied to a scenario of "artificial intelligence (AI) model training that requires multi-point collaboration".

For example, 6th generation mobile communication networks (6G) are committed to achieving "Al Native", that is, providing an end-to-end operating environment for Al within the network to meet operating requirements throughout an entire lifecycle of AI.

The entire lifecycle of Al includes data acquisition, model selection, model training, and inference. In a case where a distributed Al model training with collaboration between a terminal and a plurality of base stations is performed in a wireless network, a large number of intermediate computing results are generated in the training process, which may have the following impacts on the access network: 1. data in a radio access network (RAN) is not sent by a user plane function (UPF) network element, but may be directly generated by a base station or terminal; 2. the interaction requirements between the plurality of base stations and the terminal are increased. According to existing standards, if the plurality of base stations need to send training results to the terminal or the terminal needs to transmit data to the plurality of base stations simultaneously, the terminal needs to first access a master eNodeB (MeNB) and then add a secondary eNodeB (SeNB) to perform uplink and downlink full-duplex communication before data transmission between the terminal and the plurality of base stations are achieved; alternatively, the plurality of base stations first transmit data to the master eNodeB, and then the master eNodeB sends the data to the terminal uniformly. It may be understood that the process described above may generate a latency of tens or even hundreds of milliseconds, which causes intermediate results to be unable to be transmitted timely, thereby affecting the training results.

Therefore, in order to enable the terminal to transmit data to a plurality of base stations and to enable the plurality of base stations to send training results to the terminal, a random access method is provided in the embodiments of the present disclosure. As shown in FIG. 9, the random access method may be implemented by the following steps.

In Sa1, a terminal sends messages 1 (MSG1s) to a plurality of base stations by using the same or different resources (e.g., a time domain, a frequency domain, or a spatial domain). The MSG1 includes a random access request message.

The random access request message includes a random access preamble (or an identifier of the random access preamble).

For example, the terminal may send the random access request messages to the plurality of base stations by using the same resources; alternatively, the terminal may send the random access request messages on RACH resources associated with the plurality of base stations.

For example, the terminal may send the random access request messages to the plurality of base stations in the RRC_IDLE state, the RRC_INACTIVE state, and the RRC_CONNECTED state. For example, the step described above may also be applied to RRC connection recovery, small data transmission (SDT) procedures, and handover procedures for the terminal in the RRC_INACTIVE state.

In Sa2, the plurality of base stations send MSG2s to the terminal. The MSG2 includes a random access response message.

For example, a first message may be uniformly sent to the terminal by a first base station of the plurality of base stations, and the first message includes random access response messages of the plurality of base stations for the terminal.

For example, the random access response message includes an identifier of the base station, an UL grant configured by the base station for the terminal, TC-RNTI configured by the base station for the terminal, and TA command configured by the base station for the terminal.

For example, the terminal may receive the random access response messages sent by the plurality of base stations in the RRC_IDLE state, RRC_INACTIVE state, and RRC_CONNECTED state. For example, the step described above may also be applied to RRC connection recovery, small data transmission (SDT) procedures, and handover procedures for the terminal in the RRC_INACTIVE state.

In Sa3, the terminal establishes connections with the plurality of base stations in response to the random access response messages of the plurality of base stations, and then receives configurations for the terminal from the plurality of base stations. The plurality of base stations may configure dedicated resources and bearers for the terminal.

In Sa4, the terminal may exchange training data or sensing data with the plurality of base stations based on the established connections.

For example, the terminal may send training sample data, sensing requests, or sensing data to the plurality of base stations based on the established connections. The plurality of base stations may send AI training results to the terminal based on the established connections.

The solutions in the embodiments of the present disclosure are mainly described above from the perspective of methods. It may be understood that, in order to implement the functions described above, a random access device includes at least one of corresponding hardware structures and corresponding software modules for performing a variety of functions. Those skilled in the art will easily realize that the embodiments of the present disclosure may be implemented in the form of hardware or a combination of hardware and computer software, with reference to the units and the algorithm steps of the plurality of examples described in the embodiments disclosed herein. Whether a certain function is performed by hardware or computer software-driven hardware depends on the specific applications and design constraints of the technical solutions. Professional technicians may use different methods to implement the described functions, for each specific application, but such implementation will not be considered beyond the scope of the embodiments of the present disclosure.

It may be understood that, in order to implement the functions described above, a random access device includes corresponding hardware structures and/or software modules for performing a variety of functions. Those skilled in the art will easily realize that the present disclosure may be implemented in the form of hardware or a combination of hardware and computer software, with reference to the algorithm steps of the plurality of examples described in the embodiments of the present disclosure. Whether a certain function is performed by hardware or computer software-driven hardware depends on the specific applications and design constraints of the technical solutions. Professional technicians may use different methods to implement the described functions, for each specific application, but such implementation will not be considered beyond the scope of the present disclosure.

In the embodiments of the present disclosure, the random access device may be divided into functional modules according to the method embodiments described above. For example, each functional module may be divided corresponding to each function, or two or more functions may be integrated into one functional module. The integrated module described above may be implemented in the form of hardware or in the form of software. It will be noted that the division of modules in the embodiments of the present disclosure is illustrative, and is merely a kind of logical functional division, and there may be other division manners in actual implementations. The description is given below by considering an example in which each functional module is divided corresponding to each function.

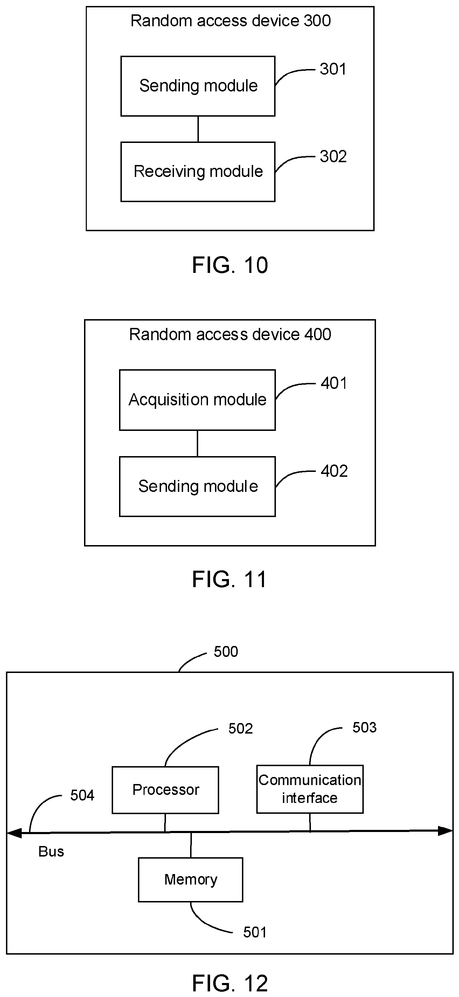

FIG. 10 is a schematic diagram showing a structure of a random access device provided in the embodiments of the present disclosure. The random access device 300 is applied to a terminal and may perform the random access method provided in the method embodiments described above. As shown in FIG. 10, the random access device 300 includes a sending module 301 and a receiving module 302.

The sending module 301 sends random access request messages to a plurality of base stations.

The receiving module 302 receives a first message. The first message includes random access response messages of the plurality of base stations for the terminal.

In some embodiments, the first message includes a plurality of media access control sub-protocol data units (MAC subPDUs), and each MAC subPDU is configured to carry a random access response message of a base station.

In some embodiments, the MAC subPDU includes a MAC subheader and a MAC random access response (RAR). The MAC subheader includes a node identifier field, and the node identifier field is configured to indicate an identifier of the base station corresponding to the MAC subPDU.

In some embodiments, the MAC RAR includes at least one of:
uplink grant information configured by the base station corresponding to the MAC subPDU;
a temporary authentication identifier configured by the base station corresponding to the MAC subPDU; and
a timing advance command configured by the base station corresponding to the MAC subPDU.

In some embodiments, the first message includes a MAC subPDU. The MAC subPDU includes a MAC subheader and a MAC RAR. The MAC RAR is configured to carry the random access response messages of the plurality of base stations.

In some embodiments, the MAC RAR includes a plurality of node identifier fields, and each node identifier field includes an identifier of a base station.

In some embodiments, the MAC RAR further includes uplink grant information, temporary authentication identifiers, and timed advance commands configured by the plurality of base stations.

In some embodiments, the MAC RAR includes a plurality of field sets. A field set includes a first field, a second field, and a third field. The first field is configured to carry uplink grant information configured by a base station, the second field is configured to carry a temporary authentication identifier configured by the base station, and the third field is configured to carry a timing advance command configured by the base station.

In some embodiments, the MAC RAR includes a fourth field, a fifth field, and a sixth field. The fourth field is configured to carry the uplink grant information configured by the plurality of base stations, the fifth field is configured to carry the temporary authentication identifiers configured by the plurality of base stations, and the sixth field is configured to carry the timing advance commands configured by the plurality of base stations.

FIG. 11 is a schematic diagram showing a structure of another random access device provided in the embodiments of the present disclosure. The random access device 400 is applied to a first base station and may perform the random access method provided in the method embodiments described above. As shown in FIG. 11, the random access device 400 includes: an acquisition module 401 and a sending module 402.

The acquisition module 401 is configured to acquire random access response messages of a plurality of base stations.

The sending module 402 is configured to send a first message to a terminal. The first message includes the random access response messages of the plurality of base stations for the terminal.

In some embodiments, the first base station is one of the plurality of base stations.

In some embodiments, the first message includes a plurality of MAC subPDUs, and each MAC subPDU is configured to carry a random access response message of a base station.

In some embodiments, the MAC subPDU includes a MAC subheader and a MAC RAR. The MAC subheader includes a node identifier field, and the node identifier field is configured to indicate an identifier of the base station corresponding to the MAC subPDU.

In some embodiments, the MAC RAR includes at least one of:
uplink grant information allocated and configured by the MAC subPDU;
a temporary authentication identifier configured by the base station corresponding to the MAC subPDU; and
a timing advance command configured by the base station corresponding to the MAC subPDU.

In some embodiments, the first message includes a MAC subPDU. The MAC subPDU includes a MAC subheader and a MAC RAR. The MAC RAR is configured to carry the random access response messages of the plurality of base stations.

In some embodiments, the MAC RAR includes a plurality of node identifier fields, and each node identifier field includes an identifier of a base station.

In some embodiments, the MAC RAR further includes uplink grant information, temporary authentication identifiers, and timed advance commands configured by the plurality of base stations.

In some embodiments, the MAC RAR includes a plurality of field sets. A field set includes a first field, a second field, and a third field. The first field is configured to carry uplink grant information configured by a base station, the second field is configured to carry a temporary authentication identifier configured by the base station, and the third field is configured to carry a timing advance command configured by the base station.

In some embodiments, the MAC RAR includes a fourth field, a fifth field, and a sixth field. The fourth field is configured to carry the uplink grant information configured by the plurality of base stations, the fifth field is configured to carry the temporary authentication identifiers configured by the plurality of base stations, and the sixth field is configured to carry the timing advance commands configured by the plurality of base stations.

In a case where the functions of the integrated modules are implemented in the form of hardware, a structure of the communication device involved in the embodiments described above is provided in the embodiments of the present disclosure. As shown in FIG. 12, the communication device 500 includes a processor 502 and a bus 504. In some embodiments, the communication device may further include a memory 501. In some embodiments, the communication device 500 may further include a communication interface 503.

The processor 502 may implement or execute a variety of exemplary logical blocks, modules and circuits described with reference to the embodiments of the present disclosure. The processor 502 may be a central processing unit, a general-purpose processor, a digital signal processor, an application specific integrated circuit, a field programmable gate array or any other programmable logic device, a transistor logic device, a hardware component, or any combination thereof. The processor 502 may implement or execute a variety of exemplary logical blocks, modules and circuits described with reference to the embodiments of the present disclosure. The processor 502 may also be a combination that implements computing functions, for example, a combination of one or more microprocessors, or a combination of a digital signal processor (DSP) and a microprocessor.

The communication interface 503 is configured to connect to other devices through a communication network. The communication network may be an Ethernet, a radio access network, a wireless local area network (WLAN), or the like.

The memory 501 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

In an implementation, the memory 501 may exist independently of the processor 502, and the memory 501 may be connected to the processor 502 through the bus 504 and used for storing instructions or program codes. When calling and executing the instructions or program codes stored in the memory 501, the processor 502 may perform the random access method provided in the embodiments of the present disclosure. In another implementation, the memory 501 may also be integrated with the processor 502.

The bus 504 may be an extended industry standard architecture (EISA) bus, or the like. The bus 504 may be classified as an address bus, a data bus, and a control bus. For ease of representation, only one bold line is used in FIG. 12, but it does not mean that there is only one bus or one type of bus.

A computer readable storage medium (e.g., a non-transitory computer readable storage medium) is provided in some embodiments of the present disclosure. The computer readable storage medium has stored computer program instructions. Upon the computer program instructions are run on a computer, the computer is enabled to perform the random access method as described in any one of the embodiments described above. For example, the computer readable storage medium may include, but is not limited to: a magnetic storage device (e.g., a hard disk, a floppy disk, or a magnetic tape), an optical disk (e.g., a compact disk (CD)), a digital versatile disk (DVD), a smart card and a flash memory device (e.g., an erasable programmable read-only memory (EPROM), a card, a stick or a key driver). The computer readable storage media described in the present disclosure may represent one or more devices and/or other machine-readable storage media for storing information. The term "machine-readable storage medium" may include, but is not limited to, wireless channels and a variety of other media capable of storing, containing, and/or carrying instructions and/or data.

A computer program product including instructions is provided in the embodiments of the present disclosure. Upon the computer program product is run on a computer, the computer is enabled to perform the random access method as described in any one of the embodiments described above.

The above are merely specific implementations of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A random access method, applied to a terminal and comprising:
sending random access request messages to a plurality of base stations; and
receiving a first message, wherein the first message includes random access response messages of the plurality of base stations for the terminal.

2. The method according to claim 1, wherein the first message includes a plurality of media access control sub-protocol data units (MAC subPDUs), and each MAC subPDU is configured to carry a random access response message of a base station.

3. The method according to claim 2, wherein the MAC subPDU includes a MAC subheader and a MAC random access response (RAR); the MAC subheader includes a node identifier field, and the node identifier field is configured to indicate an identifier of a base station corresponding to the MAC subPDU.

4. The method according to claim 3, wherein the MAC RAR includes at least one of:
uplink grant information configured by the base station corresponding to the MAC subPDU;
a temporary authentication identifier configured by the base station corresponding to the MAC subPDU; and
a timing advance command configured by the base station corresponding to the MAC subPDU.

5. The method according to claim 1, wherein the first message includes a MAC subPDU, the MAC subPDU includes a MAC subheader and a MAC RAR, and the MAC RAR is configured to carry the random access response messages of the plurality of base stations.

6. The method according to claim 5, wherein the MAC RAR includes a plurality of node identifier fields, and each of the plurality of node identifier fields includes an identifier of a base station.

7. The method according to claim 5, wherein the MAC RAR further includes uplink grant information, temporary authentication identifiers, and timing advance commands configured by the plurality of base stations.

8. The method according to claim 7, wherein the MAC RAR includes a plurality of field sets; a field set includes a first field, a second field and a third field; the first field is configured to carry uplink grant information configured by a base station, the second field is configured to carry a temporary authentication identifier configured by the base station, and the third field is configured to carry a timing advance command configured by the base station.

9. The method according to claim 7, wherein the MAC RAR includes a fourth field, a fifth field, and a sixth field;
the fourth field is configured to carry the uplink grant information configured by the plurality of base stations;
the fifth field is configured to carry the temporary authentication identifiers configured by the plurality of base stations; and
the sixth field is configured to carry the timing advance commands configured by the plurality of base stations.

10. A random access method, applied to a first base station and comprising:
acquiring random access response messages of a plurality of base stations; and
sending a first message to a terminal, wherein the first message includes the random access response messages of the plurality of base stations for the terminal.

11. The method according to claim 10, wherein the first base station is one of the plurality of base stations.

12. The method according to claim 10, wherein the first message includes a plurality of MAC subPDUs, and each MAC subPDU is configured to carry a random access response message of a base station.

13. The method according to claim 12, wherein the MAC subPDU includes a MAC subheader and a MAC RAR; the MAC subheader includes a node identifier field, and the node identifier field is configured to indicate an identifier of a base station corresponding to the MAC subPDU.

14. The method according to claim 13, wherein the MAC RAR includes at least one of:
uplink grant information configured by the base station corresponding to the MAC subPDU;
a temporary authentication identifier configured by the base station corresponding to the MAC subPDU; and
a timing advance command configured by the base station corresponding to the MAC subPDU.

15. The method according to claim 10, wherein the first message includes a MAC subPDU, the MAC subPDU includes a MAC subheader and a MAC RAR, and the MAC RAR is configured to carry the random access response messages of the plurality of base stations.

16. The method according to claim 15, wherein the MAC RAR includes a plurality of node identifier fields, and each of the plurality of node identifier fields includes an identifier of a base station.

17. The method according to claim 15, wherein the MAC RAR further includes uplink grant information, temporary authentication identifiers, and timing advance commands configured by the plurality of base stations.

18. The method according to claim 17, wherein the MAC RAR includes a plurality of field sets; a field set includes a first field, a second field and a third field; the first field is configured to carry uplink grant information configured by a base station, the second field is configured to carry a temporary authentication identifier configured by the base station, and the third field is configured to carry a timing advance command configured by the base station.

19. The method according to claim 17, wherein the MAC RAR includes a fourth field, a fifth field, and a sixth field;
the fourth field is configured to carry the uplink grant information configured by the plurality of base stations;
the fifth field is configured to carry the temporary authentication identifiers configured by the plurality of base stations; and
the sixth field is configured to carry the timing advance commands configured by the plurality of base stations.

20. A communication device, comprising a memory and a processor, wherein the memory is coupled to the processor; the memory is configured to store instructions executable by the processor; upon executing the instructions, the processor performs the random access method according to any one of claims 1 to 19.

21. A computer readable storage medium, wherein the computer readable storage medium has stored computer instructions that, upon run on an electronic device, enable the electronic device to perform the random access method according to any one of claims 1 to 19.
